# DEMANDE DE BREVET EUROPEEN

(11) **EP 1 925 933 A1**
(43) Date de publication de la demande: **28.05.2008**
(21) Numéro de dépôt: 06124743.3
(22) Date de dépôt: 24.11.2006
(51) Int. Cl.: G01N 27/12

(54) **Détecteur de gaz à consommation réduite**

(71) Demandeur: MiCS MicroChemical Systems SA, 2035 Corcelles (CH)
(72) Inventeur: Borrel, Hervé, 2000 Neuchâtel (CH); Moser, Nicolas, 2012 Auvernier (CH)
(74) Mandataire: GLN

(57) **Abrégé**

La présente invention concerne un détecteur de gaz comportant une alimentation en énergie électrique (5), un premier capteur (1) comprenant une couche sensible d'oxyde métallique, destinée à être mise en contact avec un mélange gazeux contenant le gaz à détecter, et capable de délivrer un signal électrique caractéristique de la quantité du gaz. Le détecteur comporte en outre un dispositif de chauffage (2) agencé pour élever la température de la couche d'oxyde métallique à une température de mesure prédéfinie et des premiers circuits électroniques (3) agencés pour activer et désactiver le fonctionnement du dispositif de chauffage, ainsi que des seconds circuits électroniques (4) destinés à déterminer la valeur de la concentration du gaz à partir du signal électrique délivré par le capteur. Les premiers circuits électroniques sont agencés pour activer le dispositif de chauffage de manière périodique au cours d'une phase de chauffage à la fin de laquelle il est désactivé, deux phases de chauffage successives étant espacées d'une première période prédéfinie, et pour que la phase de chauffage présente une première durée définie en fonction de la première période prédéfinie. L'autonomie et la stabilité du détecteur s'en trouvent ainsi augmentées.

## Description

### Domaine technique

La présente invention concerne un détecteur de gaz comportant
une alimentation en énergie électrique,
un premier capteur du type micro-usiné à membrane diélectrique fine, c'est-à-dire d'épaisseur inférieure à 10µm, comprenant une couche sensible d'oxyde métallique, destinée à être mise en contact avec un mélange gazeux contenant le gaz à détecter, et capable de délivrer un signal électrique caractéristique de la quantité du gaz,
un dispositif de chauffage agencé pour élever la température de la couche d'oxyde métallique à une température de mesure prédéfinie,
des premiers circuits électroniques agencés pour activer et désactiver le fonctionnement du dispositif de chauffage,
des seconds circuits électroniques destinés à déterminer la valeur de la concentration du gaz à partir du signal électrique délivré par le capteur.

### Etat de la technique

De tels capteurs sont déjà connus de l'état de la technique. Le brevet EP 1192452 B1, délivré le 27 août 2003 au nom de la Demanderesse, en expose un exemple ainsi que son procédé de fabrication.

Ces capteurs sont souvent utilisés pour détecter les concentrations de gaz polluants dans l'atmosphère, tel que l'ozone, les oxydes de carbone ou encore les oxydes d'azote.

L'ozone est un polluant de l'air important dans les régions habitées où l'activité humaine est génératrice de polluants de type hydrocarbures, COV et NOₓ. Cette pollution à l'ozone est nettement plus importante en été quand les températures et la luminosité sont hautes.

Outre sa présence néfaste dans l'air, l'ozone est également utilisé dans certaines applications industrielles telles que l'industrie des semi-conducteurs, le traitement de l'eau et la conservation des aliments. II est aussi nécessaire de mesurer les niveaux d'ozone dans ces domaines, en particulier pour s'assurer que ceux-ci ne dépassent pas les normes autorisées pour l'exposition des personnes.

La technologie de référence actuelle pour mesurer l'ozone est la détection par absorption UV. Les appareils disponibles sur le marché sont appelés des analyseurs et sont de taille relativement importante, équivalente à celle d'une valise de voyage, et pèsent environ 10 à 20 kilogrammes. Par ailleurs, leur coût d'environ 10000 euros rend leur utilisation limitée aux sociétés spécialisées et aux organismes de surveillance de la qualité de l'air.

En outre, les analyseurs UV actuels doivent être calibrés régulièrement du fait d'une tendance à dériver en fonction de leur durée d'utilisation qu'ils présentent systématiquement. Les organismes de mesure de la qualité de l'air effectuent typiquement une calibration tous les mois.

Les capteurs à semi-conducteurs, c'est-à-dire comprenant une couche de détection composée d'oxyde de métal, ont quant à eux la capacité de détecter un large éventail de gaz, dont l'ozone. Traditionnellement, ces capteurs étaient fabriqués à partir de substrats en céramique et présentaient une consommation en énergie électrique élevée, de l'ordre de 300 mW à 1 W, nécessitant l'utilisation d'une alimentation branchée sur secteur ou de batteries de tailles et masses importantes.

Les capteurs semi-conducteurs présentent également une stabilité dans le temps relativement limitée impliquant une calibration à intervalles réguliers assez courts.

Plus récemment, des capteurs semi-conducteurs fabriqués par micro-usinage sur silicium ont permis de réduire la consommation intrinsèque d'un facteur pouvant aller jusqu'à 10 environ par rapport aux capteurs semi-conducteurs fabriqués à partir de substrats en céramique. Leur principe consiste à créer une fine membrane d'oxyde qui servira de substrat à la couche sensible. Cette membrane ayant une capacité thermique extrêmement faible, la puissance nécessaire pour l'amener et la maintenir aux températures requises (généralement entre 250° et 500°C) pour la détection est faible, de l'ordre de 30 mW à 100 mW.

Les capteurs semi-conducteurs ont besoin d'un temps de chauffe relativement long, de l'ordre de plusieurs heures, pour fournir une mesure précise. Le temps de chauffe requis pour stabiliser le capteur varie en plus en fonction de son "passé récent". Par exemple, un capteur ayant été éteint pendant 1 mois, devra être chauffé pendant environ 12 à 24 heures avant d'être totalement stable. Ainsi, ces capteurs sont généralement mis en oeuvre en maintenant le chauffage de manière permanente depuis leur première mise en service pour éviter l'attente liée au temps de chauffe.

A titre d'exemple, un capteur conventionnel consommant 80mW associé à des circuits électroniques de mesure aura une autonomie d'environ 25 à 30 heures en étant alimenté par une batterie de 800mAh à 3,6V, ce qui correspond sensiblement à une batterie standard de téléphone portable.

La nécessité d'avoir un chauffage permanent combinée à la consommation de ces capteurs rend difficile la faisabilité d'un petit appareil portable de détection de gaz présentant une autonomie satisfaisante. Ainsi, des détecteurs portables existent sur le marché mais présentent les deux limitations citées plus haut, menant à une grande imprécision de mesure et à une autonomie très réduite de l'ordre de 24 heures.

### Divulgation de l'invention

Un but de la présente invention est de proposer un appareil portable, pour la détection de gaz comportant un capteur semi-conducteur, permettant de mesurer les concentrations de gaz de manière plus flexible en différents lieux. Plus particulièrement, un tel appareil devra avantageusement présenter une autonomie et une stabilité plus satisfaisantes que celles des appareils de l'état de la technique.

Dans ce but, il est prévu un détecteur de gaz du type mentionné plus haut,
caractérisé par le fait que les premiers circuits électroniques sont agencés
pour activer le dispositif de chauffage de manière périodique au cours d'une phase de chauffage à la fin de laquelle il est désactivé, deux phases de chauffage successives étant espacées d'une première période prédéfinie, et
pour que la phase de chauffage présente une première durée définie en fonction de la première période prédéfinie.

II est en outre prévu que les seconds circuits électroniques sont agencés pour effectuer une détermination de la concentration du gaz au terme de la phase de chauffage.

Ainsi, la présente invention est basée sur une idée allant à l'encontre de la pratique courante dans le domaine des détecteurs de gaz à capteurs semi-conducteurs, à savoir mettre en oeuvre le dispositif de chauffage du capteur de manière discontinue.

La Demanderesse a en effet constaté, au cours de recherches poussées, qu'un choix approprié de la durée du chauffage du capteur peut en permettre l'utilisation suivant un mode de chauffage discontinu tout en garantissant des résultats de détermination fiables de la concentration du gaz concerné.

A titre d'exemple non limitatif, la Demanderesse a constaté que, pour une période de mesure de l'ordre de 5 minutes, 1 minute de chauffage est nécessaire pour garantir la pertinence des mesures pour un gaz donné. Le chauffage du capteur est alors interrompu dès qu'une mesure a été effectuée jusqu'à environ 1 minute avant la mesure suivante.

Globalement, on peut estimer que le rapport entre la durée de chauffage minimale pour obtenir des mesures pertinentes et la durée totale d'utilisation du détecteur se situe aux environs de 10% à 20%. De ce fait, pour une autonomie donnée, le détecteur selon la présente invention pourra se contenter d'une batterie de capacité représentant environ 10% à 20% seulement de celle de la batterie nécessaire à assurer l'alimentation d'un détecteur de l'état de la technique. Dans de telles conditions, il devient possible de réaliser des appareils portables d'encombrement et de masse réduits.

Bien entendu, plus le taux de mise en oeuvre du chauffage sur la durée totale d'utilisation est important, plus la fiabilité des mesures est assurée. Toutefois, lorsque ce taux est de l'ordre de 10 à 20%, la fiabilité est déjà suffisante, notamment grâce au fait que l'humidité environnante ne perturbe plus les mesures de manière notable, et les fréquences de mesures possibles sont suffisantes pour un grand nombre d'applications existantes.

Les valeurs mentionnées ci-dessus ne sont pas limitatives et sont fournies à titre indicatif, en relation avec la détection d'ozone. Ainsi, elles sont susceptibles de varier légèrement suivant le gaz considéré.

Par ailleurs, le temps cumulé de fonctionnement du capteur présente une augmentation située dans ce même rapport de 10 à 20% en référence à celui d'un détecteur de l'état de la technique, ce qui permet de prolonger notablement la durée à prévoir entre deux calibrations successives du capteur.

De manière avantageuse, on pourra prévoir que le détecteur portable selon la présente invention comprend un dispositif de communication à distance, notamment de type RF, pour pouvoir relever les résultats de ses mesures depuis une station de base distante.

Dans un mode de réalisation préféré, le détecteur peut être muni d'au moins un second capteur supplémentaire, identique au premier capteur, pour permettre la mise en oeuvre d'un procédé de calibration périodique du premier capteur afin de neutraliser sa dérive en fonction du temps. Dans ce cas, le second capteur est associé à un dispositif de chauffage supplémentaire activé périodiquement, avec une seconde période prédéfinie supérieure à la période d'activation du chauffage du premier capteur, pour permettre une seconde détermination de la concentration en gaz, à laquelle la mesure du premier capteur est comparée. La période d'activation du chauffage du second capteur étant supérieure à celle du premier capteur, le temps cumulé de fonctionnement du second capteur s'en trouve également plus faible que celui du premier, rallongeant ainsi la durée à prévoir entre deux calibrations successives du second capteur par rapport à celle du premier capteur, voire jusqu'à son remplacement par un nouveau capteur.

### Brève description des dessins

D'autres caractéristiques et avantages de la présente invention apparaîtront plus clairement à la lecture de la description détaillée d'un mode de réalisation préféré qui suit, faite en référence aux dessins annexés donnés à titre d'exemples non limitatifs et dans lesquels:

- la figure 1 représente un schéma simplifié d'un détecteur de gaz selon un mode de réalisation préféré de la présente invention;

- la figure 2a illustre une représentation graphique exposant un mode de mise en oeuvre d'un détecteur de gaz selon l'état de la technique, et

- la figure 2b illustre une représentation graphique exposant un mode de mise en oeuvre préféré d'un détecteur de gaz selon la présente invention.

### Mode(s) de réalisation de l'invention

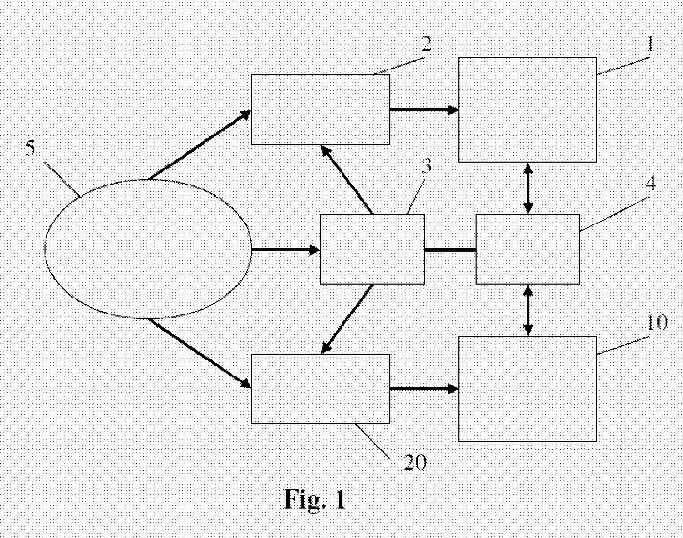

La figure 1 représente de manière schématique les composants d'un détecteur de gaz, selon un mode de réalisation préféré de la présente invention, nécessaires à la compréhension de cette dernière.

Le détecteur de gaz comporte un premier capteur 1 comprenant notamment une couche sensible d'oxyde métallique et associé à un premier dispositif de chauffage 2 destiné à élever la température de la couche sensible à une température de mesure prédéfinie, généralement de l'ordre de 250 à 500°C.

Des premiers circuits électroniques 3 sont prévus pour gérer le fonctionnement du dispositif de chauffage, en particulier pour l'activer et le désactiver.

Des seconds circuits électroniques 4 sont connectés au capteur 1 pour déterminer la concentration du gaz à détecter à un instant donné.

Le détecteur de gaz comporte en outre des moyens d'alimentation en énergie électrique 5 permettant de faire fonctionner les circuits électroniques ainsi que le dispositif de chauffage. De manière préférée, non limitative, les moyens d'alimentation comprennent une ou plusieurs batteries rechargeables (non représentées).

Suivant une variante de réalisation préférée, mais de manière facultative, le détecteur de gaz comporte au moins un second capteur 10, sensiblement identique au premier capteur 1, et associé à un second dispositif de chauffage 20 destiné à élever la température de sa couche sensible à une température de mesure sensiblement identique à celle du premier capteur.

Dans ce cas, les premiers et seconds circuits électroniques peuvent être agencés pour coopérer avec le second capteur 10 et le second dispositif de chauffage 20. De manière alternative, l'homme du métier pourra prévoir des circuits électroniques supplémentaires, distincts, associés au second capteur et au second dispositif de chauffage, sans sortir du cadre de la présente invention.

De manière préférée non limitative, le capteur utilisé est du type à semi-conducteur micro-usiné sur silicium.

Pour les détails liés à la structure du capteur, à son fonctionnement ou encore à son procédé de fabrication, l'homme du métier pourra par exemple consulter le brevet européen susmentionné dont le contenu est incorporé en référence dans la présente demande. Tout autre capteur connu et adapté à la mise en oeuvre de la présente invention pourra bien entendu être utilisé sans sortir du cadre de la présente invention.

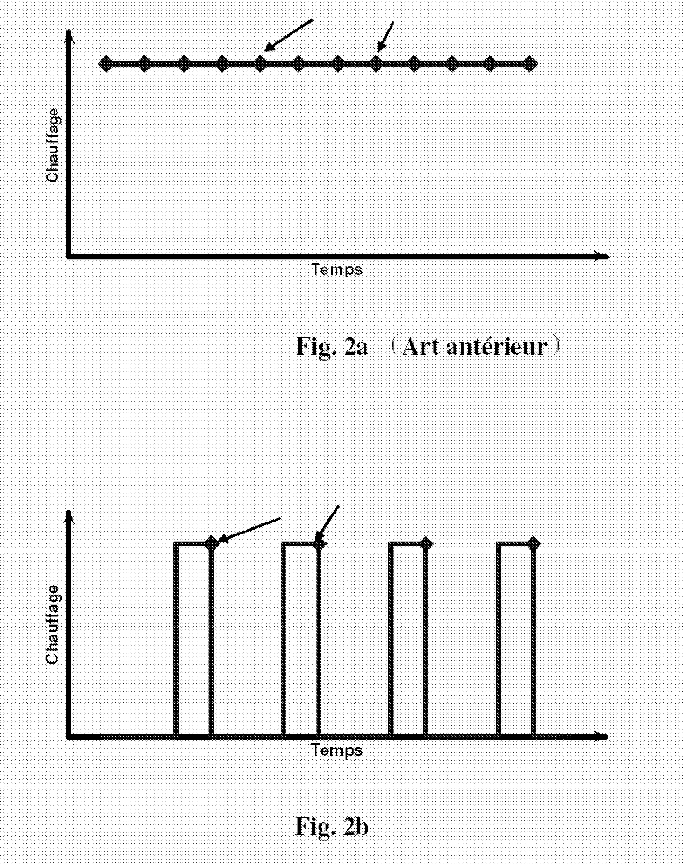

La figure 2a illustre de manière schématique le mode de fonctionnement typique d'un dispositif de chauffage selon l'état de la technique.

Celui-ci est activé suivant un mode de fonctionnement continu du fait que la couche d'oxyde métallique nécessite un temps important, à partir du moment où elle commence à être chauffée, avant d'être en équilibre avec le mélange de gaz à analyser. En règle générale, l'équilibre est atteint après 2 à 12 heures de chauffage lors de la mise en route du capteur. Une fois l'équilibre atteint, des mesures peuvent être effectuées à tout moment, certaines d'entre-elles étant repérées par des flèches sur la figure 2a.

Toutefois, comme cela a été mentionné précédemment, la consommation de ces détecteurs est telle que, soit, ils présentent une faible autonomie - de l'ordre de 24 heures - s'ils comportent des batteries similaires à celles utilisées dans les téléphones portables, soit, ils présentent des dimensions et/ou une masse les rendant peu transportables lorsqu'ils offrent une autonomie plus importante.

Lors de ses recherches, la Demanderesse a constaté que, contre toute attente, le mode de chauffage du capteur peut être rendu intermittent à condition, toutefois, de respecter une durée de chauffage adaptée à la durée d'arrêt du dispositif de chauffage entre deux activations successives avant de prendre une nouvelle mesure.

La figure 2b illustre de manière schématique le mode de fonctionnement du dispositif de chauffage 2 d'un détecteur selon la présente invention.

On constate que ce mode de fonctionnement est du type "pulsé", c'est-à-dire que les premiers circuits électroniques 3 du détecteur sont agencés de telle manière que le dispositif de chauffage est activé périodiquement, avec une période prédéfinie, pendant une durée qui est sensiblement la même à chaque nouvelle activation.

Par ailleurs, les seconds circuits électroniques 4 du détecteur sont agencés pour effectuer une détermination de la concentration du gaz à détecter à la fin de chaque période d'activation du dispositif de chauffage (des flèches repèrent certaines de ces déterminations).

Les recherches de la Demanderesse ont permis de constater que le choix de la durée d'activation du dispositif de chauffage doit être lié à la valeur de la période prédéfinie pour que les mesures effectuées par le capteur soient fiables.

Ainsi, à titre d'exemples non limitatifs, on notera que pour une période prédéfinie de l'activation du dispositif de chauffage de l'ordre de 5 minutes, la durée du chauffage avant d'effectuer la mesure doit être de l'ordre d'une minute, alors qu'elle doit être de l'ordre de 3 minutes pour une période de 15 minutes et, de l'ordre de 10 minutes pour une période de 60 minutes.

Ses recherches ont permis à la Demanderesse de délimiter des plages d'utilisation dans lesquelles la mise en oeuvre du détecteur selon l'invention est particulièrement avantageuse. II est en effet ressorti que pour une période prédéfinie de l'activation du dispositif de chauffage comprise entre environ 2 et 60 minutes, la durée nécessaire pour la phase de chauffage est sensiblement comprise entre 30 secondes et 10 minutes.

En considérant le cas de l'ozone, à titre illustratif non limitatif, la plage de concentration à surveiller s'étend généralement entre 0 et 200ppb avec une tolérance de l'ordre de 20ppb. La Demanderesse a constaté que pour détecter une concentration de 50ppb, il est nécessaire de définir la durée de chauffage de telle manière qu'elle représente au moins 20% de la valeur de la période prédéfinie de l'activation du dispositif de chauffage lorsque la période des mesures est inférieure ou égale à environ 1 heure. La zone comprise entre 0 et 50ppb ne représentant pas de danger pour l'homme, il est envisageable de diminuer légèrement la durée de chauffage, sous cette limite de 20%, pour les applications particulières où l'autonomie est un paramètre critique.

Par ailleurs, de manière générale, il a été constaté qu'une durée de chauffage inférieure à 30 secondes ne permet pas d'obtenir de résultats fiables. Inversement, le rapport entre la durée de chauffage et la période prédéfinie de l'activation du dispositif de chauffage peut être défini à une valeur supérieure à 20%, toutefois cela implique une diminution de l'autonomie du détecteur, ce qui n'est pas toujours souhaitable.

Grâce à un tel mode de mise en oeuvre du détecteur de gaz selon la présente invention, la consommation de celui-ci est réduite sensiblement dans les mêmes proportions que son temps d'allumage. Ainsi, un capteur, qui consommerait 100mW en mode d'alimentation continu, consommera en moyenne 16,7mW lorsqu'il est alimenté avec un mode intermittent présentant une durée de chauffage de 5 minutes pour une période prédéfinie de l'activation du dispositif de chauffage de 25 minutes. L'autonomie de la batterie sera donc prolongée dans les mêmes proportions.

Un appareil portable avec un capteur fonctionnant sur ce principe, et équipé de 5 à 6 batteries de téléphone, ou d'une batterie équivalente, aura donc une autonomie de l'ordre du mois, tout en gardant une taille et un poids acceptables. On pourra ainsi limiter le volume occupé par le détecteur à environ 1 litre, tandis que sa masse pourra être inférieure à 1 kilogramme.

Bien entendu, la durée de la phase de chauffage précédant la première détermination de la concentration de gaz reste importante, de l'ordre de 2 à 12 heures, la différence par rapport à l'état de la technique intervenant dès la deuxième mesure.

De manière complémentaire, on pourra prévoir que la mise en oeuvre du capteur selon la présente invention comporte des périodes d'inactivités prolongées régulières, comme par exemple la nuit. Dans ce cas, ses circuits électroniques peuvent être programmés de telle manière que certaines mesures sont plus espacées pour tenir compte de ces périodes d'inactivité, les durées de chauffage subséquentes étant bien entendu adaptées à la durée de l'inactivité.

On peut également noter que la stabilité de l'élément sensible, qui est généralement liée à son temps cumulé de chauffe, est améliorée. Un capteur qui serait suffisamment stable pendant 3 mois en mode de fonctionnement continu devient donc suffisamment stable sur plus d'une année d'utilisation grâce à la mise en oeuvre de la présente invention. La durée de vie du détecteur à partir de sa calibration en usine est donc prolongée. Cette durée de vie de la calibration présente des implications directes au niveau du coût de fonctionnement puisque l'on peut associer un coût non négligeable à une opération de calibration. Ces appareils étant de plus en plus destinés à une utilisation par le grand public, un coût de fonctionnement mesuré présente un avantage supplémentaire.

Suivant des variantes de réalisation préférées, on pourra prévoir que la batterie du détecteur peut être rechargée au moyen d'un chargeur de batterie du même type que ceux utilisés en relation avec les téléphones mobiles. On pourra également prévoir que le capteur est porté par un module connecté de manière amovible à un support du détecteur pour faciliter son remplacement lorsque ses mesures ne sont plus fiables. De manière préférée, l'utilisateur pourra lui-même procéder au remplacement de ce module, éventuellement sans même avoir besoin d'outils. On peut en outre prévoir que le détecteur comporte un dispositif de communication à distance, par exemple de type RF, pour pouvoir transmettre les résultats des déterminations effectuées à une station de base distante. Cette dernière pourra, de cette façon, centraliser les résultats fournis par une pluralité de détecteurs similaires répartis dans une région géographique donnée.

Comme cela a été mentionné en relation avec la description de la figure 1, le détecteur de gaz selon la présente invention peut être muni d'au moins un second capteur 10, sensiblement identique au premier capteur 1, notamment dans le but d'effectuer une calibration régulière de ce dernier sur la base de mesures effectuées par le second capteur.

Dans ce cas, le second capteur 10 sera préférablement activé moins souvent que le premier capteur, de sorte que son temps de fonctionnement cumulé augmente moins rapidement que celui du premier et que sa propre dérive ne fausse pas l'opération de calibration du premier capteur.

Les circuits électroniques du détecteur sont alors agencés de manière à effectuer une détermination périodique de la concentration en gaz à partir du second capteur, pour la comparer avec la détermination effectuée à partir du premier capteur la plus proche dans le temps, qu'elle soit antérieure ou postérieure. Si la différence entre ces deux déterminations présente une valeur située au-delà d'un seuil prédéfini, le premier capteur est calibré sur la base de la détermination effectuée à partir du second capteur. Toute méthode mathématique de calibration connue et adaptée pourra être mise en oeuvre pour réaliser la calibration du premier capteur sans sortir du cadre de la présente invention.

La calibration peut non seulement être réalisée sur la base d'une valeur unique qui permet de réajuster la position d'une courbe de transfert R(03), le cas échéant, mais aussi sur la base de plusieurs mesures sur une semaine ou plus, qui permet de corriger éventuellement la pente de la courbe R(03).

Un circuit de calibration spécifique pourra être intégré directement dans les seconds circuits électroniques 4, ou prévu en plus de ces derniers de manière indifférente pour la mise en oeuvre de l'invention.

De manière préférée, les circuits électroniques du détecteur sont agencés de telle manière que le mode de fonctionnement du second capteur 10 est similaire à celui du premier capteur 1, avec une seconde période prédéfinie d'activation du dispositif de chauffage 20 nettement supérieure à la première période prédéfinie en relation avec le premier capteur, pour des questions de dérive du second capteur et d'autonomie du détecteur, tel que cela ressort des explications qui précèdent.

Ainsi, on pourra prévoir, à titre d'exemple illustratif non limitatif, que la seconde période prédéfinie d'activation du dispositif de chauffage supplémentaire est d'environ 24 à 48 heures, la durée de la phase de chauffage correspondante étant de l'ordre de 1 à 2 heures. On notera que dans le cas du second capteur, la période de mesure étant suffisamment importante, le rapport entre la durée de la phase de chauffage sur la valeur de la seconde période prédéfinie d'activation du dispositif de chauffage peut prendre des valeurs inférieures à celles exposées en relation avec le premier capteur, ce qui est nettement plus intéressant du point de vue de l'autonomie du détecteur.

La description qui précède correspond à un mode de réalisation préféré de l'invention décrit à titre non limitatif. L'homme du métier pourra adapter le présent enseignement à ses propres besoins ou pour combiner différentes variantes mentionnées, sans sortir du cadre de l'invention.

## Revendications

1. Détecteur de gaz comportant
une alimentation en énergie électrique (5),
un premier capteur (1) du type micro-usiné à membrane diélectrique fine, c'est-à-dire d'épaisseur inférieure à 10µm, comprenant une couche sensible d'oxyde métallique, destinée à être mise en contact avec un mélange gazeux contenant ledit gaz, et capable de délivrer un signal électrique caractéristique de la quantité dudit gaz,
un dispositif de chauffage (2) agencé pour élever la température de ladite couche d'oxyde métallique à une température de mesure prédéfinie,
des premiers circuits électroniques (3) agencés pour activer et désactiver le fonctionnement dudit dispositif de chauffage,
des seconds circuits électroniques (4) destinés à déterminer la valeur de la concentration dudit gaz à partir dudit signal électrique,
**caractérisé en ce que** lesdits premiers circuits électroniques sont agencés
pour activer ledit dispositif de chauffage de manière périodique au cours d'une phase de chauffage à la fin de laquelle il est désactivé, deux phases de chauffage successives étant espacées d'une première période prédéfinie, et
pour que ladite phase de chauffage présente une première durée définie en fonction de ladite première période prédéfinie, et
**en ce que** lesdits seconds circuits électroniques sont agencés pour effectuer une détermination de la concentration dudit gaz au terme de ladite première durée.

2. Détecteur de gaz selon la revendication 1, **caractérisé en ce que** ladite première période prédéfinie est sensiblement comprise entre deux et soixante minutes, la durée correspondante de ladite phase de chauffage étant sensiblement comprise entre trente secondes et dix minutes.

3. Détecteur de gaz selon la revendication 2, **caractérisé**
**en ce que** ladite alimentation en énergie électrique (5) comprend au moins une batterie rechargeable,
**en ce qu'**il présente une autonomie de fonctionnement entre deux recharges successives de ladite batterie supérieure ou égale à trois semaines, et
**en ce qu'**il occupe un volume sensiblement inférieur ou égal à 1 litre.

4. Détecteur de gaz selon la revendication 2, **caractérisé**
**en ce que** ladite alimentation en énergie électrique (5) comprend au moins une batterie rechargeable,
**en ce qu'**il présente une autonomie de fonctionnement entre deux recharges successives de ladite batterie supérieure ou égale à trois semaines, et
**en ce qu'**il présente une masse totale inférieure à un kilogramme.

5. Détecteur de gaz selon l'une quelconque des revendications précédentes, **caractérisé en ce qu'**il comporte en outre un dispositif de communication à distance pour transmettre les résultats des déterminations effectuées à une station de base distante.

6. Détecteur de gaz selon l'une quelconque des revendications précédentes, **caractérisé en ce que** ledit premier capteur (1) est porté par un module connecté de manière amovible à un support dudit détecteur.

7. Détecteur de gaz selon l'une quelconque des revendications précédentes, **caractérisé en ce qu'**il comporte en outre un second capteur (10) identique audit premier capteur (1) et associé à un dispositif de chauffage supplémentaire (20), lesdits premiers circuits électroniques (3) étant agencés pour activer ledit dispositif de chauffage supplémentaire de manière périodique au cours d'une phase de chauffage dudit second capteur à la fin de laquelle il est désactivé, deux phases de chauffage successives étant espacées d'une seconde période prédéfinie, ladite phase de chauffage dudit second capteur présentant une seconde durée définie en fonction de ladite seconde période prédéfinie et au terme de laquelle lesdits seconds circuits électroniques (4) effectuent une détermination de la concentration dudit gaz au contact dudit second capteur, lesdites secondes période prédéfinie et durée présentant des valeurs respectives supérieures à celles des premières période prédéfinie et durée.

8. Détecteur de gaz selon la revendication 7, **caractérisé en ce qu'**il comporte un circuit de calibration agencé pour comparer périodiquement les déterminations effectuées à partir dudit premier capteur (1) à celles effectuées à partir dudit second capteur (10) et calibrer ledit premier capteur en cas de divergence entre les déterminations comparées, sur la base des résultats dudit second capteur.

9. Procédé de mise en oeuvre d'un détecteur de gaz selon l'une quelconque des revendications précédentes, comportant un premier capteur (1),
**caractérisé en ce qu'**il comporte les étapes périodiques, de période prédéfinie, consistant à
activer le dispositif de chauffage (2) associé audit premier capteur,
attendre pendant une durée définie sur la base de la valeur de ladite période prédéfinie,
effectuer une détermination de la valeur de la concentration dudit gaz, désactiver ledit dispositif de chauffage.

10. Procédé de calibration d'un capteur (1) mis en oeuvre dans un détecteur de gaz selon la revendication 8, à l'aide d'un second capteur (10)
**caractérisé en ce qu'**il comporte les étapes consistant à,
suivant une première période prédéfinie,
activer ledit dispositif de chauffage (2),
maintenir le chauffage pendant une durée définie sur la base de la valeur de ladite période prédéfinie puis,
effectuer une détermination de la valeur de la concentration dudit gaz, et
désactiver ledit dispositif de chauffage,
suivant une seconde période prédéfinie, de valeur supérieure à celle de ladite première période,
activer ledit dispositif de chauffage supplémentaire (20),
maintenir le chauffage supplémentaire pendant une durée définie sur la base de la valeur de ladite seconde période prédéfinie, effectuer une détermination de la valeur de la concentration dudit gaz au contact dudit second capteur à l'expiration de ladite durée,
comparer la détermination effectuée à partir dudit second capteur à la détermination effectuée à partir dudit premier capteur la plus proche dans le temps,
calibrer ledit premier capteur sur la base de la détermination effectuée à partir dudit second capteur si les déterminations comparées présentent un écart supérieur à une valeur prédéfinie.
